# EUROPEAN PATENT SPECIFICATION

(11) **EP 2 216 845 B1**
(45) Date of publication and mention of the grant of the patent: **09.05.2012**
(21) Application number: 10152616.8
(22) Date of filing: 04.02.2010
(51) Int. Cl.: H01M 8/04, H01M 8/10, H01M 8/06

(54) **FUEL CELL SYSTEM**
BRENNSTOFFZELLENSYSTEM
SYSTÈME DE PILE À COMBUSTIBLE

(30) Priority: 05.02.2009 US 150074 P; 09.12.2009 US 634562
(43) Date of publication of application: 11.08.2010
(73) Proprietor: Samsung SDI Co., Ltd., Gyeonggi-do (KR)
(72) Inventor: Na, Young-Seung, Gyeonggi-do (KR); Song, In-Seob, Gyeonggi-do (KR); Joung, Young-Soo, Gyeonggi-do (KR); Song, Mi-Jeong Legal & IP Team, Samsung SDI Co., LTD.,, Gyeonggi-do (KR)
(74) Representative: Gulde Hengelhaupt Ziebig & Schneider

(56) References cited:
- EP-A1- 1 962 360
- DE-A1- 10 324 721
- JP-A- 2005 222 760
- US-A1- 2004 146 769
- US-A1- 2008 107 949

## Description

### BACKGROUND OF THE INVENTION

### (a) Field of the Invention

The present invention relates to a fuel cell system, and more particularly, to a fuel cell system that improves a structure of supplying fuel to a fuel cell stack.

### (b) Description of the Related Art

Fuel cells are devices that electrochemically generate power by using fuel (hydrogen or reformed gas) and oxidant (oxygen or air) and directly convert the fuel (hydrogen or reformed gas) and oxidant (oxygen or air) continuously supplied from the outside into electrical energy by an electrochemical reaction.

Pure oxygen or air containing a large amount of oxygen is used as the oxidant of the fuel cell and pure hydrogen or fuel containing a large amount of hydrogen, which is generated by reforming hydrocarbon-based fuel (LNG, LPG, CH₃OH, etc.) is used as the fuel.

Hereinafter, a direct methanol fuel cell (DMFC) will be primarily described among the fuel cells for better comprehension and ease of description. The direct methanol fuel cell supplies high-concentration methanol to a fuel cell stack to generate electricity by reaction with the oxygen.

The direct methanol fuel cell uses high-concentration fuel to increase energy weight density. In the case of using the high-concentration fuel, the direct methanol fuel cell mixes the high-concentration fuel with recovered fuel and supplies proper-concentration fuel to the fuel cell stack.

A scheme of supplying the fuel to the fuel cell stack is classified into an active scheme and a passive scheme. In the active scheme, the fuel is supplied to the fuel cell stack by using a fuel pump, while in the passive scheme, the fuel is supplied to the fuel cell stack by pressurizing a cartridge with a capillary phenomenon or exhaust gas.

The active scheme has an advantage of controlling concentration and flow rate of the fuel in accordance with a condition of the fuel cell system. On the contrary, the active scheme has a disadvantage in that devices such as the fuel pump, a recycling pump, a flow rate sensor, a concentration sensor, etc are required, such that the volume, weight, and power consumption of the fuel cell system increases. In particular, a high-precision pump is required to control the flow rate with precision, but the high-precision pump is expensive and easily out of order depending on a change of the flow rate.

Meanwhile, in the passive scheme, the volume, weight, and power consumption of the fuel cell system can be decreased because the fuel is supplied by using only a passive physical phenomenon without a pump or a sensor, but the flow rate cannot be controlled with precision, such that efficiency of the fuel cell system is remarkably deteriorated or permanent damages to the fuel cell system occurs.

Further, the passive scheme cannot control large flow rate, such that it is difficult that the passive scheme is adopted in a high-output fuel cell system.

A fuel supply unit for a fuel cell system is known from US 2004/0146769.

### SUMMARY OF THE INVENTION

The present invention has been made in an effort to provide a fuel cell system having an advantage of stably supplying fuel with low power.

According to a first aspect of the invention, there is provided a fuel supply unit for a fuel cell system according to claim 1. The fuel supply unit includes a concentration control unit comprising:
a fuel storage chamber configured to provide a stored fuel;
a recovered fuel passage member configured to allow passage of a recovered fuel; and
a fuel permeation membrane positioned between the fuel storage chamber and the passage member, the fuel permeation membrane being made of a material which is permeable for the stored fuel by diffusion.

The fuel cell system may be a direct oxidation fuel cell and the fuel may be a hydrocarbon based fuel. Most preferred, the fuel cell system is a direct methanol fuel cell and the fuel is methanol.

The fuel permeation membrane may be an ionomer polymer membrane, especially may be made of sulfonated polytetrafluoroethylene (nafion).

The fuel storage chamber may comprise a fuel storage pack. The fuel storage pack may have a pouch or bellows shape. The fuel storage chamber may further include a stored fuel passage member that is connected with the fuel storage pack.

The recovered fuel passage member has a plate shape and a recovered fuel passage is formed on one surface the recovered fuel passage member. The recovered fuel passage has a meandering groove structure.

According to another aspect of the invention, there is provided a fuel cell system including a fuel supply unit as described above.

According to another aspect, there is provided a method of supplying a fuel for a fuel cell system, the method including the steps of:
(i) providing a fuel supply unit for a fuel cell system, the fuel supply unit including a concentration control unit comprising:
   a fuel storage chamber configured to provide a stored fuel;
   a recovered fuel passage member configured to allow passage of a recovered fuel; and
   a fuel permeation membrane positioned between the fuel storage chamber and the passage member, the fuel permeation membrane being made of a material which is permeable for the stored fuel by diffusion; and
(ii) controlling the flow rate of the recovered fuel through the recovered fuel passage member so as to adjust a predetermined concentration of the fuel that flows into a fuel cell stack of the fuel cell system.

According to a preferred embodiment of the method, the concentration of the stored fuel is higher than the concentration of the recovered fuel.

As described above, according to the present invention, it is possible to stably supply fuel while minimizing power consumption at the time of supplying the fuel. Further, it is possible to reduce production cost by decreasing the number of components.

### BRIEF DESCRIPTION OF THE DRAWINGS

FIG. 1 is a schematic diagram of a fuel cell system according to a first exemplary embodiment of the present invention.
FIG. 2 is an exploded perspective view illustrating a structure of the fuel cell stack shown in FIG. 1.
FIG. 3 is an exploded perspective view of a concentration control unit according to a first exemplary embodiment of the present invention.
FIG. 4 is a schematic diagram of a fuel cell system according to a second exemplary embodiment of the present invention.
FIG. 5 is a cross-sectional view of a concentration control unit according to a second exemplary embodiment of the present invention.
FIG. 6 is a graph illustrating a relationship between fuel concentration and flow rate of recovered fuel in the fuel cell system according to a first exemplary embodiment of the present invention.
FIG. 7 is a graph illustrating an average and a standard deviation of the fuel concentration depending on the flow rate of the recovered fuel in the fuel cell system according to a first exemplary embodiment of the present invention.

### DETAILED DESCRIPTION OF THE EMBODIMENTS

The present invention will be described more fully hereinafter with reference to the accompanying drawings, in which exemplary embodiments of the invention are shown.

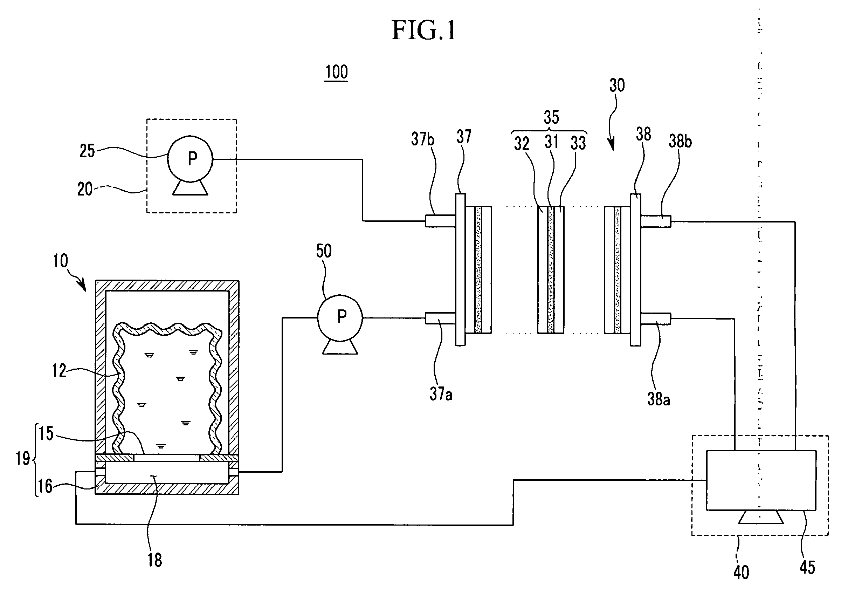

FIG. 1 is a schematic diagram illustrating an entire configuration of a fuel cell system according to an exemplary embodiment of the present invention.

Referring to the above-mentioned figure, the fuel cell system 100 according to the exemplary embodiment may adopt a direct methanol fuel cell scheme that generates electrical energy by direct reaction of methanol and oxygen.

However, the present invention is not limited thereto and the fuel cell system according to the exemplary embodiment may be configured by a direct oxidation fuel cell scheme that reacts liquid or gas fuel containing hydrogen, such as ethanol, LPG, LNG, gasoline, butane gas, etc. with oxygen. Further, the fuel cell system may be configured by a polymer electrode fuel cell (PEMFC) that uses the fuel by reforming the fuel into reformed gas containing sufficient hydrogen.

The fuel used in the fuel cell system 100 generally represents hydrocarbon-based fuel in a liquid or gas state, such as methanol, ethanol, natural gas, LPG, etc.

In addition, the fuel cell system 100 may use oxygen gas stored in an additional storing means or air as oxidant that reacts with hydrogen.

The fuel cell system 100 according to the exemplary embodiment includes a fuel cell stack 30 that generates power by using the fuel and the oxidant, a fuel supply unit 10 that supplies the fuel to the fuel cell stack 30, an oxidant supply unit 20 that supplies the oxidant for generating electricity to the fuel cell stack 30, and a recovery unit 40 that recovers a non-reacted fuel and moisture discharged from the fuel cell stack 30 and resupplies the non-reacted fuel and the moisture to the fuel cell stack 30.

The fuel supply unit 10 is connected with the fuel cell stack 30 and includes a fuel storage pack 12 that stores liquefied fuel and a concentration control unit 19 that is connected to the fuel storage pack 12. The fuel supply unit 10 will be described below in more detail.

The oxidant supply unit 20 is connected with the fuel cell stack 30 and is provided with an oxidant pump 25 that suctions external air at a predetermined pumping force and supplies the external air to the fuel cell stack 30.

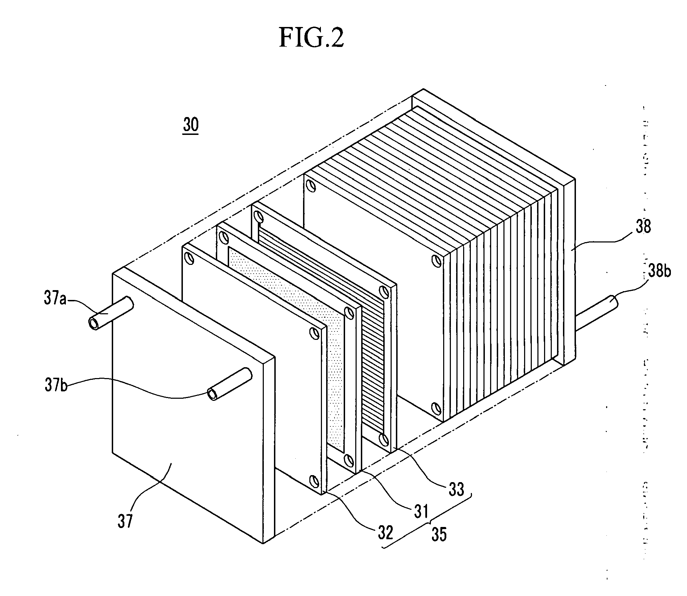

FIG. 2 is an exploded perspective view illustrating a structure of the fuel cell stack shown in FIG. 1.

Referring to FIGS. 1 and 2, the fuel cell stack 30 adopted in the fuel cell system 100 includes a plurality of electricity generating units 35 that generate the electrical energy by inducing oxidation and reduction reactions of the fuel and the oxidant.

Each of the electricity generating unit 35 represents a unit cell that generates the electricity and includes a membrane-electrode assembly (MEA) 31 that oxidizes and reduces oxygen in the fuel and the oxidant, and separators (also referred to as a bipolar plate in the art) 32 and 33 that supply the fuel and the oxidant to the membrane-electrode assembly 31.

The electricity generating unit 35 has a structure in which the separators 32 and 33 are disposed at both sides around the membrane-electrode assembly 31. The membrane-electrode assembly 31 includes an electrolyte membrane disposed at the center thereof, a cathode electrode disposed at one side of the electrolyte membrane, and an anode electrode disposed at the other side of the electrolyte membrane.

The separators 32 and 33 closely contact with each other with the membrane-electrode assembly 31 interposed therebetween. The separators 32 and 33 each have a fuel passage and an air passage at both sides of the membrane-electrode assembly 31. At this time, the fuel passage is disposed at an anode electrode of the membrane-electrode assembly 31 and the air passage is disposed at a cathode electrode of the membrane-electrode assembly 31. In addition, the electrolyte membrane enables ion exchange in which hydrogen ions generated from the anode electrode move to the cathode electrode and are bound to oxygen of the cathode electrode to generate water.

In the fuel cell system 100, the plurality of electricity generating units 35 are successively arranged to constitute the fuel cell stack 30. Herein, end plates 37 and 38 for integrally fixing the fuel cell stack 30 are installed in outermost parts of the fuel cell stack 30.

A first inlet 37a for supplying the fuel to the fuel cell stack 30 and a second inlet 37b for supplying the oxidant to the stack are formed in one end plate 37. Further, a first outlet 38a for discharging non-reacted fuel remaining after reacting in the anode electrode of the membrane-electrode assembly 31 and a second outlet 38b for discharging moisture generated by bonding reaction of hydrogen and oxygen in the cathode electrode of the membrane-electrode assembly 31 and non-reacted air are formed in the other end plate 38.

Meanwhile, the recovery unit 40 includes a gas-liquid separator 45 that collects fluids discharged from the outlets 38a and 38b, and separates the fluids into the gas and the liquid. The gas-liquid separator 45 installed at a rear end of the fuel cell stack 30 may be composed of a centrifugal pump or an electrokinetic pump. The gas-liquid separator 45 mixes the non-reacted fuel discharged from the first outlet 38a with the non-reacted air containing the moisture discharged from the second outlet 38b to separate the mixed non-reacted fuel and air into the liquid and the gas.

The gas-liquid separator 45 discharges the gas to the outside and supplies the recovered fuel to the fuel supply unit 10.

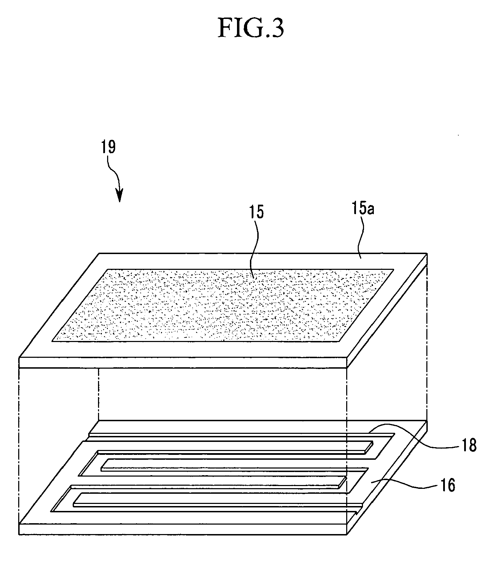

FIG. 3 is an exploded perspective view of a concentration control unit according to a first exemplary embodiment of the present invention.

Referring to FIGS. 1 and 3, the fuel supply unit according to the exemplary embodiment includes a fuel storage pack 12 and a concentration control unit 19. The concentration control unit 19 includes a fuel permeation membrane 15 and a recovered fuel passage member 16 which is installed in contact with one surface of the fuel permeation membrane 15.

The fuel storage pack 12 has a pouch or bellows shape expansively transformed depending on a change in the volume of the fuel. As the fuel is consumed, the volume of the fuel in the fuel storage pack 12 gradually decreases. As a result, an inner space is also gradually downsized while the fuel storage pack 12 is transformed.

The fuel stored in the fuel storage pack 12 is pressurized at a predetermined pressure. Like the exemplary embodiment, the fuel storage pack 12 is transformed, such that a pressure acting on the fuel may be maintained constantly at all times.

The fuel permeation membrane 15 is connected to an opening of the fuel storage pack 12. Herein, the fuel permeation membrane 15 serves to permeate the fuel depending on a difference in concentration.

The fuel permeation membrane 15 may be made of various materials having high permeability to the fuel. For example, the fuel permeation membrane 15 may be made of nafion 112 having high permeability to methanol. Nafion 112 is a material prepared by "EI du Pont de Nemours CO". A frame part 15a for supporting the fuel permeation membrane 15 is formed on the periphery of the fuel permeation membrane 15. The fuel permeation membrane 15 is installed between high-concentration fuel and low-concentration fuel and moves fuel components included in the high-concentration fuel to the low-concentration fuel. That is, the fuel permeation membrane 15 may be regarded as a kind of reverse osmosis membrane that selectively permeates the fuel.

The recovered fuel passage member 16 having a passage through which the recovered fuel circulates is installed on one surface of the fuel permeation membrane 15.

The recovered fuel passage member 16 is a plate shape. A recovered fuel passage 18 where the recovered fuel is positioned is formed on one surface of the recovered fuel passage member 16. The recovered fuel passage 18 has a meandering groove structure. Therefore, the recovered fuel containing a large amount of moisture transferred, from the recovery unit 40 circulates in the recovered fuel passage 18. Herein, the meandering represents a structure in which grooves are connected to each other in zigzags.

The recovered fuel moves in contact with the fuel permeation membrane 15. When the recovered fuel moves, stored fuel that is high concentration and a high pressure moves to the recovered fuel passage 18 through the fuel permeation membrane 15. When the stored fuel moves to the recovered fuel, the stored fuel and the recovered fuel are mixed to thereby obtain proper-concentration fuel. In addition, the proper-concentration fuel is supplied to the fuel cell stack 30 by means of a fuel transferring pump 50.

The concentration of the fuel may be properly controlled by controlling an area and a time in which the stored fuel and the recovered fuel contact with the fuel permeation membrane 15, and the flow of the recovered fuel.

As such, according to the exemplary embodiment, the concentration of the fuel is properly adjusted by contacting the high-concentration fuel and the low-concentration fuel with each other, such that the proper-concentration fuel can be supplied to the fuel cell stack 30. Accordingly, even though components such as the pump, a concentration sensor, and a flow rate sensor are removed, the fuel can be stably supplied. Further, although an additional pump is not installed, a large amount of fuel can be supplied to the fuel cell stack depending on the contact area of the fuel.

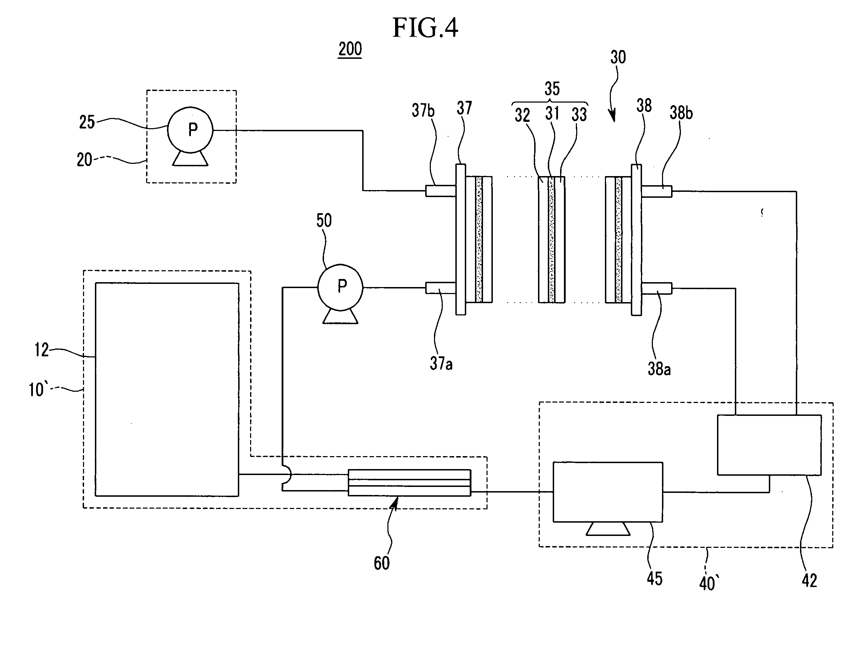

FIG. 4 is a schematic diagram of a fuel cell system according to a second exemplary embodiment of the present invention.

Referring to FIG. 4, the fuel cell system 200 according to the exemplary embodiment includes a fuel cell stack 30 that generates electricity by using fuel and oxidant, a fuel supply unit 10' that supplies the fuel to the fuel cell stack 30, an oxidant supply unit 20 that supplies the oxidant used for generating the electricity to the fuel cell stack 30, and a recovery unit 40' that recovers non-reacted fuel and air discharged from the fuel cell stack 30 and resupplies the non-reacted fuel and air to the fuel cell stack 30.

The fuel cell system 200 according to the second exemplary embodiment has the same configuration as the fuel cell .system..100 according to the first exemplary embodiment of the present invention except for the fuel supply unit 10' and the recovery unit 40'. Therefore, the same configuration will not be repetitively described.

The recovery unit 40' includes a heat exchanger 42 that receives and cools oxidant containing non-reacted fuel and moisture discharged from the fuel cell stack 30 and a gas-liquid separator 45 that separates fluids discharged from the heat exchanger 42 into gas and a liquid.

The heat exchanger 42 serves to cool and condense high-temperature fluids discharged from the fuel cell stack 30. The gas-liquid separator 45 separates the condensed fluids into the gas and the liquid, discharges the gas to the outside and supplies the liquid to the fuel supply unit 10.

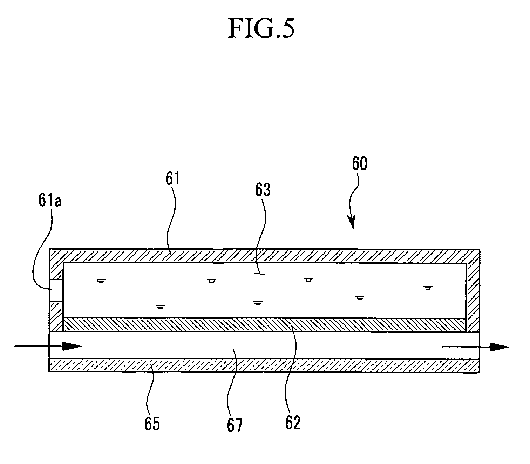

FIG. 5 is a cross-sectional view of a concentration control unit according to a second exemplary embodiment of the present invention.

Referring to FIGS. 4 and 5, the fuel supply unit 10' according to the exemplary embodiment supplies the fuel to the fuel cell stack 30 and includes a fuel storage pack 12 and a concentration control unit 60 connected to the fuel storage pack 12.

The fuel storage pack 12 has a general structure for storing the fuel. Otherwise, the fuel storage pack 12 may have a replaceable cartridge shape that incorporates the fuel.

The concentration control unit 60 includes a stored fuel passage member 61 that is connected with the fuel storage pack 12 through a pipe and has a space where the stored fuel circulates, a recovered fuel passage member 65 that has a recovered fuel passage 67 where recovered fuel circulates, and a fuel permeation membrane 62 that is installed between the stored fuel passage member 61 and the recovered fuel passage member 65.

The stored fuel passage member 61 has a substantially plate shape and has a stored fuel passage 63 that is formed of a groove. Further, an inlet 61 a is formed at one end of the stored fuel passage member 61 to be in communication with the fuel storage pack 12 and the other end of the stored fuel passage member 61 is blocked. Therefore, the stored fuel passage member 61 has the same internal pressure as the fuel storage pack 12.

The stored fuel passage 63 formed in the stored fuel passage member 61 contacts with the fuel permeation membrane 62, such that the stored fuel that flows in from the fuel storage pack 12 is discharged through the fuel permeation membrane 62.

The recovered fuel passage member 65 has substantially the plate shape. The recovered fuel passage 67 through the recovered fuel circulates is formed on a surface of the recovered fuel passage member 65 facing the fuel permeation membrane 62 and both ends of the recovered fuel passage 67 are opened. One end of the passage is connected to the recovery unit 40' and receives the recovered fuel, while the other end of the passage is connected to the fuel cell stack 30 and supplies the fuel to the fuel cell stack 30.

The fuel permeation membrane 62 is composed of a reverse osmosis membrane that permeates and transfers fuel components from the stored fuel to the recovered fuel as described in the first exemplary embodiment.

Therefore, the stored fuel may be mixed with the recovered fuel through the fuel permeation membrane 62. In this process, the concentration of the fuel is properly controlled.

As such, according to the exemplary embodiment of the present invention, the concentration of the fuel supplied to the fuel cell stack 30 can be easily controlled by using the concentration control unit 60 connected with the fuel storage pack 12 through the pipe.

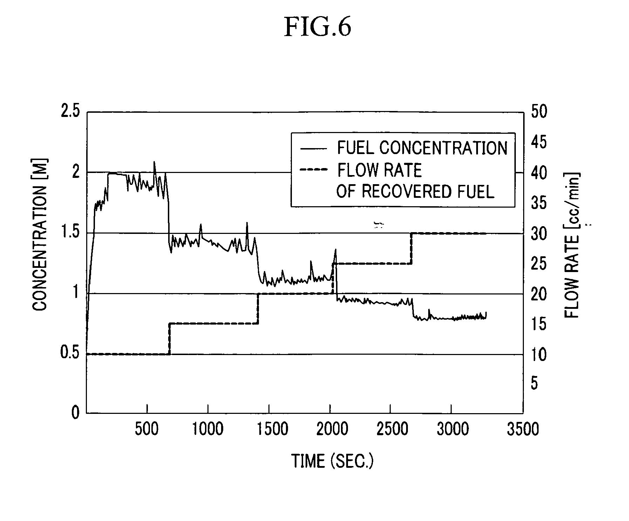

FIG. 6 is a graph illustrating a relationship between the fuel concentration and the flow rate of the recovered fuel in the fuel cell system according to the first exemplary embodiment.

As shown in FIG. 6, as the flow rate of the recovered fuel increases, the concentration of the fuel that flows into the fuel cell stack decreases by stages and when the flow rate of the recovered fuel is 20cc/min or more, the concentration of the fuel keeps remarkably constant.

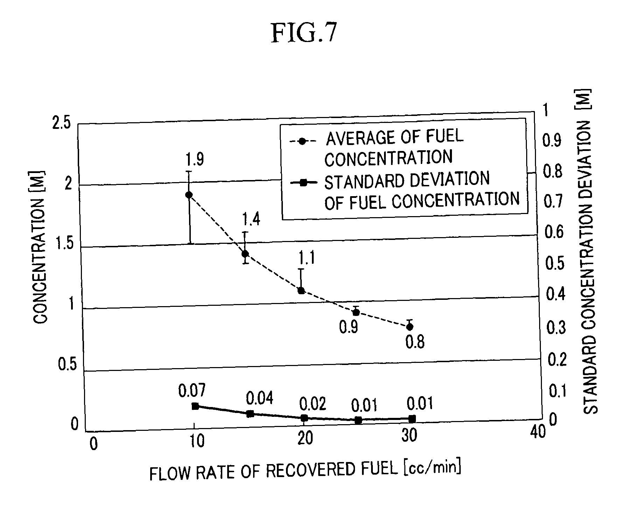

FIG. 7 is a graph illustrating an average and a standard deviation of the fuel concentration depending on the flow rate of the recovered fuel in the fuel cell system according to the first exemplary embodiment of the present invention.

As shown in FIG. 7, when the flow rate of the recovered fuel is 20cc/min or more, the standard deviation of the fuel concentration keeps 0.02 M or less, such that it is possible to achieve stability of the same level as stability in controlling the flow rate of the recovered fuel by using a high-precision pump.

## Claims

1. A fuel supply unit (10) for a fuel cell system, the fuel supply unit (10) including a concentration control unit (19, 60) comprising:
a fuel storage chamber configured to provide a stored fuel;
a recovered fuel passage member (16, 65) configured to allow passage of a recovered fuel; and
a fuel permeation membrane (15, 62) positioned between the fuel storage chamber and the passage member (16, 65), the fuel permeation membrane (15, 62) being made of a material which is permeable for the stored fuel by diffusion,
wherein the recovered fuel passage member (16, 65) has a plate shape and on one surface of the recovered fuel passage member (16, 65) there is formed a recovered fuel passage (18, 67) having a meandering groove structure.

2. The fuel supply unit according to claim 1, wherein the fuel cell system is a direct oxidation fuel cell and the fuel is a hydrocarbon based fuel.

3. The fuel supply unit according to claim 2, wherein the fuel cell system is a direct methanol fuel cell and the fuel is methanol.

4. The fuel supply unit according to any of the preceding claims, wherein the fuel permeation membrane (15, 62) is an ionomer polymer membrane.

5. The fuel supply unit according to claim 4, wherein the fuel permeation membrane (15, 62) is made of sulfonated polytetrafluoroethylene (nafion).

6. The fuel supply unit according to any of the preceding claims, wherein the fuel storage chamber comprises a fuel storage pack (12).

7. The fuel supply unit according to claim 6, wherein the fuel storage pack (12) has a pouch or bellows shape.

8. The fuel supply unit according to claim 6, wherein the fuel storage chamber further includes a stored fuel passage member (61) that is connected with the fuel storage pack (12).

9. A fuel cell system including a fuel supply unit (10) according to any of claims 1 through 8.

10. The fuel cell system of claim 9, further comprising:
an oxidant supply unit (20),
a fuel cell stack (30),
a recovery unit (40) including a gas-liquid separator (45), and
a fuel transferring pump (50).

## Patentansprüche

1. Brennstoffzufuhreinheit (10) für ein Brennstoffzellensystem, wobei die Brennstoffzufuhreinheit (10) eine Konzentrationssteuerungseinheit (19, 60) aufweist, die Folgendes aufweist:
eine Brennstoffspeicherkammer, die zur Bereitstellung eines gespeicherten Brennstoffs ausgebildet ist;
ein Durchflusselement (16, 65) für wiedergewonnenen Brennstoff, das derart ausgebildet ist, dass es den Durchfluss von wiedergewonnenem Brennstoff ermöglicht; und
eine Brennstoffpermationsmembran (15, 62), die zwischen der Brennstoffspeicherkammer und dem Durchflusselement (16, 65) positioniert ist, wobei die Brennstoffpermationsmembran (15, 62) aus einem Material besteht, das für den gespeicherten Brennstoff durch Diffusion permeabel ist,
wobei das Durchflusselement (16, 65) für wiedergewonnenen Brennstoff eine Plattenform aufweist und auf einer Oberfläche des Durchflusselementes (16, 65) für wiedergewonnenen Brennstoff ein Durchfluss (18, 67) für wiedergewonnenen Brennstoff mit einer gewundenen Nutenstruktur ausgebildet ist.

2. Brennstoffzufuhreinheit nach Anspruch 1, wobei das Brennstoffzellensystem eine Direktoxidationsbrennstoffzelle ist und der Brennstoff ein Brennstoff auf der Basis von Kohlenwasserstoff ist.

3. Brennstoffzufuhreinheit nach Anspruch 2, wobei das Brennstoffzellensystem eine Direktmethanolbrennstoffzelle ist und der Brennstoff Methanol ist.

4. Brennstoffzufuhreinheit nach einem der vorhergehenden Ansprüche, wobei die Brennstoffpermationsmembran (15, 62) eine Ionomer-Polymer-Membran ist.

5. Brennstoffzufuhreinheit nach Anspruch 4, wobei die Brennstoffpermationsmembran (15, 62) aus sulfoniertem Polytetrafluorethylen (Nafion) besteht.

6. Brennstoffzufuhreinheit nach einem der vorhergehenden Ansprüche, wobei die Brennstoffspeicherkammer einen Brennstoffspeicherpack (12) aufweist.

7. Brennstoffzufuhreinheit nach Anspruch 6, wobei der Brennstoffspeicherpack (12) eine Beutel- oder Balgform aufweist.

8. Brennstoffzufuhreinheit nach Anspruch 6, wobei die Brennstoffspeicherkammer weiterhin ein Element (61) zum Durchfluss von gespeichertem Brennstoff aufweist, das mit dem Brennstoffspeicherpack (12) verbunden ist.

9. Brennstoffzellensystem, aufweisend eine Brennstoffzufuhreinheit (10) nach einem der Ansprüche 1 bis 8.

10. Brennstoffzellensystem nach Anspruch 9, weiterhin aufweisend:
eine Oxidationsmittelzufuhreinheit (20),
einen Brennstoffzellenstapel (30),
eine Rückgewinnungseinheit (40), die einen Gas-Flüssigkeits-Separator (45) aufweist, und
eine Brennstofftransportpumpe (50).

## Revendications

1. Unité (10) d'alimentation en combustible pour un système de pile à combustible, l'unité (10) d'alimentation en combustible comportant une unité (19, 60) de commande de concentration qui comprend :
une chambre de stockage de combustible configurée de manière à fournir un combustible stocké ;
un élément (16, 65) de passage du combustible récupéré configuré de manière à autoriser le passage d'un combustible récupéré ; et
une membrane (15, 62) de perméation du combustible placée entre la chambre de stockage de combustible et l'élément de passage (16, 65), la membrane (15, 62) de perméation de combustible étant réalisée dans un matériau qui est perméable au combustible stocké par diffusion,
dans laquelle l'élément (16, 65) de passage du combustible récupéré a une forme de plaque, et un passage (18, 67) du combustible récupéré ayant une structure de rainure sinueuse est formé sur une surface de l'élément (16, 65) de passage du combustible récupéré.

2. Unité d'alimentation en combustible selon la revendication 1, dans laquelle le système de pile à combustible est une pile à combustible à oxydation directe et le combustible est un combustible à base d'hydrocarbures.

3. Unité d'alimentation en combustible selon la revendication 2, dans laquelle le système de pile à combustible est une pile à combustible à méthanol direct et le combustible est du méthanol.

4. Unité d'alimentation en combustible selon l'une quelconque des revendications précédentes, dans laquelle la membrane (15, 62) de perméation du combustible est une membrane polymère ionomère.

5. Unité d'alimentation en combustible selon la revendication 4, dans laquelle la membrane (15, 62) de perméation du combustible est réalisée en polytétrafluoroéthylène sulfoné (nafion).

6. Unité d'alimentation en combustible selon l'une quelconque des revendications précédentes, dans laquelle la chambre de stockage de combustible comprend un bloc (12) de stockage de combustible.

7. Unité d'alimentation en combustible selon la revendication 6, dans laquelle le bloc (12) de stockage de combustible a une forme de poche ou de soufflet.

8. Unité d'alimentation en combustible selon la revendication 6, dans laquelle la chambre de stockage de combustible comprend en outre un élément (61) de passage du combustible stocké qui est relié au bloc (12) de stockage de combustible.

9. Système de pile à combustible, comportant une unité (10) d'alimentation en combustible selon l'une quelconque des revendications 1 à 8.

10. Système de pile à combustible de la revendication 9, comprenant en outré :
une unité (20) d'alimentation en oxydant,
un empilement (30) de piles à combustible,
une unité de récupération (40) comprenant un séparateur gaz-liquide (45), et
une pompe (50) de transfert de combustible.
